# DEMANDE DE BREVET EUROPEEN

(11) **EP 2 266 925 A1**
(43) Date de publication de la demande: **29.12.2010**
(21) Numéro de dépôt: 09163387.5
(22) Date de dépôt: 22.06.2009
(51) Int. Cl.: C03C 15/00, G03G 7/00, G03G 15/16, B44C 1/22, C03C 19/00, G03G 8/00, G03G 9/08, G03G 9/087, G03G 9/107

(54) **Matage localisé du verre**

(71) Demandeur: AGC Glass Europe, 1170 Bruxelles (Watermael-Boitsfort) (BE)
(72) Inventeur: Jacobs, Nadia, 6040 Jumet (BE); Symoens, Bruno, 6040 Jumet (BE)
(74) Mandataire: Le Vaguerèse, Sylvain Jacques

(57) **Abrégé**

L'invention concerne un procédé de matage formant motif sur un produit verrier dans lequel le produit est revêtu d'une couche masquant les parties non-attaquées de la surface, le matage des parties non-masquées et l'élimination de la couche de masquage, dans lequel la couche de masquage est obtenue par une technique xerographique (électrophotographique) dans laquelle :
- un motif est digitalisé et mémorisé ;
- le motif en question est reproduit sur une surface sensible soumise à un champ électrique ;
- la surface sensible dont la surface est sélectivement activée est revêtue par une composition pulvérulente de toner, comportant des constituants électriquement chargeables et un matériau de revêtement protecteur fusible ;
- la composition pulvérulente adhère sélectivement aux parties activées de la surface sensible ;
- la composition adhérant à la surface sensible est transférée sur l'objet en verre à revêtir préalablement chauffé faisant fondre cette composition formant une couche qui adhère à l'objet en verre.

## Description

La présente invention concerne la production de motifs sur des matériaux verriers, et particulièrement de motifs obtenus par dépolissage ou gravure du substrat verrier.

Par dépolissage ou "matage" de la surface d'un article en verre, on entend l'opacification d'au moins une partie de la surface de l'article en verre par élimination d'une certaine quantité de matière à la surface de l'article en verre. Le dépolissage peut aussi induire la création d'une texturation particulière à la surface de l'article en verre ou graver plus profondément cette même surface. Dans la suite sous les noms de matage ou dépolissage on entend toutes les attaques quelles que soient leurs profondeurs.

Selon le procédé de l'invention, le matage est réalisé de manière sélective sur certaines parties de la surface de l'article en verre, laissant intactes les parties restantes.

La technique de matage sélectif comprend de façon traditionnelle trois étapes successives réalisées selon la séquence suivante : une étape de protection ou masquage du verre traité, une étape de dépolissage localement et une étape de finissage.

Durant la première étape, ou étape de protection, au moins une partie de la surface de l'article en verre qui ne doit pas être matée est protégée par le dépôt d'une couche protectrice.

Diverses techniques de masquage sélectif permettent d'obtenir un motif sur la surface d'un article en verre.

Une manière pour constituer un masque consiste par exemple à reproduire le motif par photo-polymérisation sur une composition liquide revêtant la surface du produit traité, les parties non exposées après élimination de la composition non-polymérisée étant disponibles pour l'attaque locale.

L'irradiation sélective de ce, type permet d'obtenir des images avec une bonne définition mais au prix de méthodes relativement compliquées, et donc coûteuses.

D'autres méthodes sont plus souvent mises en oeuvre. C'est en particulier le cas des techniques appliquant un masque formé à partir de compositions cireuses à bas point de fusion. Ces compositions sont appliquées à température modérée sous forme liquide sur la surface à protéger. La composition solidifiée adhère au verre. L'application suivant un motif déterminé est réalisée par exemple par une technique de jets d'encre (ink-jet) ou encore simplement manuellement suivant la technique du pochoir.

Une méthode par jets d'encre est décrite dans la demande de brevet W02006/087320A1. Selon cette méthode de la cire fondue est projetée sur la surface d'un article en verre au moyen de têtes d'impression. La netteté des contours des motifs obtenus par cette voie reste cependant encore à améliorer, mais surtout la vitesse de formation des motifs, même en multipliant les têtes d'impression reste relativement lente.

D'autres méthodes de matage sélectif exploitent également l'application de cire fondue sur les parties à protéger de la surface de l'article en verre, l'application étant réalisée par sérigraphie. La reproductibilité des motifs, surtout pour les motifs les plus fins, est souvent insuffisante. Par ailleurs la préparation des masques est relativement longue et surtout chaque modification du motif requiert la constitution d'écrans spécifiques. Les dimensions des verres traités sont aussi limitées. En effet, le tamis doit être chauffant pour pouvoir laisser passer la cire. Ce type de tamis n'existe pas sur le marché pour les grands volumes (DLF 3x3.21 m).

L'invention a pour but de constituer des couches de protection dans les techniques comprenant un matage de pièces de verre, qui permettent une grande reproductibilité, même pour les motifs exigeant une très bonne définition, et ceci avec des vitesses de mise en oeuvre sensiblement accrues et sur de grandes surfaces.

A cette fin l'invention propose de procéder à l'application d'une couche de protection reproduisant le motif choisi par une technique dans laquelle :
- un motif est digitalisé et mémorisé ;
- le motif en question est reproduit sur une surface sensible soumise à un champ électrique ;
- la surface sensible dont la surface est sélectivement activée est revêtue par une composition pulvérulente, qualifiée de "toner", comportant des constituants électriquement chargeables et une composition de revêtement protecteur fusible ;
- la composition pulvérulente adhère sélectivement aux parties activées de la surface sensible ;
- la composition adhérant à la surface sensible est transférée sur l'objet en verre à revêtir préalablement chauffé faisant fondre cette composition formant une couche qui adhère à l'objet en verre.

Dans ces techniques de type électro-photographie, l'application de la composition comprend le plus souvent un moyen intermédiaire entre la surface sensible et l'objet en verre. Ce moyen intermédiaire transporte le toner de la surface sensible à celle de l'objet en verre. Il est destiné à éviter le contact direct de la surface électro-sensible avec l'objet à revêtir, afin de protéger cette surface électro-sensible des températures élevées (100-150°C) nécessaires à la fusion de la composition de protection sur le verre.

Dans ces techniques selon l'invention la vitesse d'opération peut être très élevée. Pour cela la surface sensible chargée électriquement, comme le moyen intermédiaire de transfert de la composition, sont animés d'un mouvement continu. Il s'agit de tambours cylindriques ou de courroies passant sur des tambours en rotation. Les objets en verre, essentiellement des feuilles de préférence planes, transportés par un convoyeur passent au contact des moyens d'application.

Les techniques de reproduction de type électro-photographiques sur verre ont fait l'objet de publications notamment EP 1 125 171, WO 02/35294, WO 2004/000565, WO 2008/128648 et WO 2008/128649

La technique en question est d'une grande souplesse d'utilisation dans la mesure où les motifs peuvent être modifiés par simple changement de l'image digitalisée qui détermine le motif reproduit sur la surface électro-sensible. Cette souplesse permet le développement de produits en nombre limité, voire à l'unité seulement, sans que le coût d'une telle opération devienne prohibitif.

Les limites en termes de définition des motifs sont celles qui sont propres à la sensibilité des supports de transfert électrostatique, et à la finesse des particules du toner utilisé.

Pour réaliser l'opération selon l'invention il est nécessaire de disposer d'une machine adéquate et surtout d'une composition ("toner") adaptée à l'usage visé.

Le toner doit en particulier pouvoir présenter une charge lorsqu'il est soumis à un champ électrique. Il doit aussi être solide pour la distribution homogène sous forme pulvérulente, et fondre sous une élévation limitée de température lors de son application sur la feuille de verre. Ces propriétés dépendent bien évidemment de la composition de ces toners. Elles dépendent aussi de la structure des grains qui les composent.

Pour assurer le transfert sélectif du toner selon le motif choisi, le toner doit être sensible aux champs électriques. Les toners utilisés selon l'invention comportent avantageusement des grains métalliques ou d'oxydes métalliques. Avantageusement les toners utilisés comportent de l'oxyde de fer pulvérulent.

Par ailleurs les toners utilisés selon l'invention comportent également une composition fusible de protection. La fusion de cette composition permet d'une part la formation d'un revêtement sans discontinuité, et d'autre part offre une bonne adhérence au verre revêtu. Le revêtement garantit également une bonne imperméabilisation des parties revêtues dans les techniques de matage à l'acide.

La composition de protection comprend au moins une cire. La cire qui peut être utilisée dans le procédé selon l'invention peut être d'origine naturelle ou synthétique. Lorsqu'elle est d'origine naturelle, la cire peut appartenir à la catégorie des cires animales, végétales ou minérales. Les cires minérales issues du pétrole sont préférées et plus particulièrement, les paraffines et les cires microcristallines. Les cires de paraffine consistent principalement en des chaînes hydrocarbonées linéaires. Elles comportent principalement de la paraffine normale (80 à 90%), et dans une moindre mesure, des paraffines ramifiées ainsi que des cyclo-paraffines. Lorsque la cire est d'origine synthétique, elle peut appartenir aux composés hydrocarbonés obtenus par reformage, aux composés naphtaléniques halogénés et aux polymères éthyléniques. De préférence, les cires d'origine synthétique sont des polymères éthyléniques ou propylèniques. Un exemple de cire synthétique bien adaptée à l'invention est un polyéthylène basse densité. Le polyéthylène peut avoir une masse moléculaire allant de 300 à 10000. De préférence, le polyéthylène a une masse moléculaire allant de 500 à 5000, et de manière plus préférée, de 600 à 900.

D'autres type de produits formant cire sont par exemple des polyamides.

Des mélanges comprenant au moins une cire d'un des types précédant, avec des composés polymères ou polycondensats, peuvent aussi être utilisés dans les compositions de protection. Ces mélanges peuvent notamment comprendre des résines de type acryliques ou méthacryliques associés à des paraffines et ceci dans des proportions variables pour autant que ces mélanges répondent aux exigences en terme de mouillabilité du produit verrier et de température de fusion appropriée.

De manière préférée, la composition de protection satisfaisant à la mise en oeuvre de l'invention présente un point de fusion de 50 à 140°C. De manière encore plus préférée, cette composition a un point de fusion d'au moins 60°C et de 120°C au plus.

Pour la constitution des toners utilisés selon l'invention la proportion pondérale des particules chargeables, est avantageusement d'au moins 5% et de préférence d'au moins 10% Les proportions préférées sont entre 15 et 50% en poids et plus particulièrement entre 20 et 35%.

Le toner comprend la composition fusible de protection en proportion pondérale qui n'est pas inférieure à 30% du toner et de préférence pas inférieure à 35% et se situe avantageusement entre 40 et 60%.

La composition du toner comporte au moins 5% en poids de cire. Cette proportion qui peut aller jusqu'à correspondre à la totalité de la composition fusible est avantageusement d'autant plus élevée que l'attaque du produit verrier est réalisée avec une solution acide plus agressive.

En dehors de la poudre chargeable et de la composition fusible, le toner selon l'invention peut comporter aussi des adjuvants traditionnels pour ce type de produits. Il s'agit notamment de ce qui est nommé ordinairement "contrôleur de charge". Ce type d'additif a pour rôle d'uniformiser la distribution des charges électriques des particules dans le toner lors de son utilisation. La proportion pondérale de ces contrôleurs de charge dans le toner, est d'ordinaire inférieure à 2%. Ces contrôleurs de charge doivent être distribués aussi uniformément que possible dans les particules de toner, notamment à la surface de ces particules.

Des contrôleurs de charge typiques sont notamment des antioxydants de type phénolique comme le produit commercialisé sous le nom de Hostanox 03. Il peut aussi s'agir de complexes d'acides organiques aromatiques. Il s'agit aussi souvent de sels d'ammonium quaternaires. Ce sont par exemple les produits commercialisés sous les noms "Copy Charge PSY", "Copy Charge N4P", "Copy Charge N5P", "Copy Blue PR"....

Les compositions des toners peuvent encore renfermer d'autres additifs, en particulier des agents dispersants dont le rôle est de faciliter la distribution homogène des particules solides chargeables dans les grains de toner. Le ou les agents dispersants ne représentent pas plus de 0,5% en poids de la suspension. Ces agents dispersants sont essentiellement des tensio-actifs. Leur teneur et leur nature doivent être bien contrôlées dans la mesure où, indépendamment de leur rôle dans la préparation du toner, ils peuvent modifier significativement le comportement des charges électriques lors de l'application.

Des dispersants utiles selon l'invention sont notamment ceux commercialisés sous les noms "Disperbyk 145", "Byk 307", "Byk 323", "Byk 410", "Byk Siclean 3700"...

Des exemples de toners sont donnés dans la suite de la description.

La préparation traditionnelle des poudres de toners passe par la formation d'une pâte extrudée et la constitution de granulés solides ("pellets"), lesquels sont ensuite broyés, réduits en poudre et triés pour ne garder que les classes granulométriques adaptées à l'application.

Pour avoir une bonne reproductibilité des motifs imprimés, il est nécessaire en particulier de faire en sorte que la granulométrie du toner soit bien uniforme et que les écarts par rapport aux valeurs médianes soient limités. Avantageusement la dispersion granulométrique est telle que par rapport à la dimension médiane Dₘ , 90% des grains se situent à des dimensions qui sont dans l'intervalle Dₘ±Dₘ/5, et de préférence dans l'intervalle Dₘ±Dₘ/10.

La dimension médiane des particules peut varier dans une certaine mesure en fonction de la finesse des motifs recherchée. Plus les dimensions sont petites, meilleure est la définition des images qui peuvent être produites. Des dimensions usuelles se situent entre 1 et 20µ et sont avantageusement entre 5 et 15µ.

L'application de la couche protectrice selon l'invention est effectuée de telle sorte qu'elle résiste au traitement de matage, que celui-ci soit entrepris par abrasion mécanique de type sablage, ou qu'il soit réalisé de manière chimique notamment par attaque d'une solution à base d'acide fluorhydrique. Le choix de la composition du toner est déterminant pour cette résistance. Il est aussi nécessaire de faire en sorte que la couche soit suffisamment épaisse et bien uniforme. Le revêtement ne doit pas comporter de lacune. La couche doit être bien continue.

En pratique il est possible de constituer des couches d'épaisseur variable. Le cas échéant plusieurs couches successives peuvent être appliquées par les techniques selon l'invention pour accroître l'épaisseur du revêtement. Pour des raisons évidentes d'économie, il est préférable de procéder en une seule application.

Les couches utiles selon les modes usuels de matage ultérieurs peuvent être cependant d'épaisseur relativement modeste. Ces couches sont notamment de 5 à 100µ 'épaisseur, et de préférence de 10 à 50µ. Avantageusement les couches appliquées selon l'invention ont une épaisseur de l'ordre de 20µ.

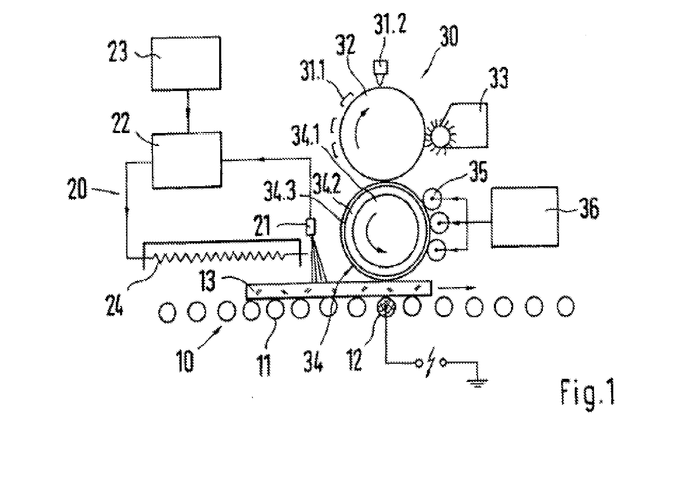

Le mode d'application selon l'invention est détaillé dans la suite en faisant référence à la figure annexée.

L'appareillage représenté comporte une unité d'impression électro-photographique désignée globalement 30. Cette unité comporte un cylindre photoconducteur 32. Ce cylindre est chargé uniformément à sa surface par au poste de charge désigné 31.1.

La charge électrique est localement supprimée de la surface suivant un motif déterminé au poste de déchargement 31.2, lequel est associé à une unité commandée par un ensemble digital comportant le motif à reproduire. Cet ensemble de commande n'est pas représenté sur la figure. Une unité de développement 33 assure l'alimentation en toner du cylindre 32 suivant le motif chargé.

L'image de toner supportée par le cylindre 32 est transférée par un moyen 34 représenté sous forme d'un cylindre. Le passage du toner du cylindre photoconducteur 32 au cylindre 34 peut être contrôlé en appliquant localement dans la zone où les deux cylindres sont le plus proche l'un de l'autre un champ électrique qui attire les particules. Ce champ peut être généré à partir de l'intérieur du cylindre 34 ou comme représenté par un générateur de champ 12 situé sous la feuille de verre.

La représentation schématique de la figure comprend un cylindre 34 pour le transfert. Celui-ci peut être effectué aussi avec une bande convoyeuse dans des conditions analogues.

Le substrat verrier, qui reçoit la couche de masquage, est représenté sous forme d'une feuille 13. Cette feuille est véhiculée par des rouleaux convoyeurs 10. Le déplacement de la feuille 13 conduit celle-ci sous le cylindre de transfert 34. La disposition est telle que la distance entre la feuille 13 et le cylindre 34 est aussi réduite que possible sans pour autant que ces éléments soient en contact. La distance peut être aussi petite que 0,1mm compte tenu de la très faible épaisseur de toner appliquée.

La feuille de verre 13 est préalablement chauffée au moyen par exemple d'une rampe de chauffage 24 constituée de résistances électriques. Le chauffage est régulé de telle sorte que la température du verre passant sous le rouleau de transfert 34 soit supérieure à la température de fusion des grains de toner, assurant le décollement des grains du cylindre 34 et l'adhésion du matériau fondu à la surface de la feuille 13. La température de la feuille est de préférence voisine de la température de fusion afin de pouvoir rapidement ramener la feuille à une température inférieure celle de fusion après l'application de la couche de masquage et ainsi figer la couche constituée.

Pour accélérer le refroidissement de la feuille, il est possible de prévoir des moyens de soufflage d'air froid sur la face portant la couche imprimée ou tout autre moyen équivalent.

La température des feuilles est un paramètre qui contrôle le bon transfert du toner et la constitution de la couche. Il est important de parfaitement commander cette température. Une mesure de celle-ci est faite juste avant le passage sous le cylindre 34 au moyen d'un système de mesure, par exemple un pyromètre optique 21. Ce moyen de mesure est avantageusement couplé à des moyens de régulation de l'ensemble de chauffage 24 des feuilles de verre, schématisé en 22.

En fonctionnement continu le passage répété des feuilles à température élevée peut conduire à un échauffement indésirable du cylindre de transfert 34. Pour éviter le risque de fusion prématuré du toner sur ce cylindre qui perturberait son transfert et finalement l'impression des feuilles, il peut être préférable de disposer de moyens refroidissant la surface de ce cylindre. Par exemple il est possible d'abaisser la température au moyen de rouleaux 35 refroidis par circulation d'un liquide réfrigérant, rouleaux mis en rotation au contact du cylindre 34. Comme précédemment la température des moyens de refroidissement et par suite celle du cylindre de transfert 34 peut être contrôlée de manière connue en soi par un dispositif de régulation schématisé en 36 en fonction de la température du cylindre de transfert mesurée par exemple par des capteurs non représentés solidaires du cylindre 34.

Pour réaliser les couches de protection les plus épaisses de façon avantageuse, on utilise de préférence un appareil tel que celui qui fait l'objet des publications WO 2008/128648 ou WO 2008/128649. Ces appareils facilitent le dépôt régulier des couches suffisamment épaisses pour ces attaques les plus fortes. Ces appareillages comportent notamment, en plus des éléments décrits précédemment, des moyens dits de conditionnement qui permettent une bonne égalisation de l'épaisseur de toner transporté.

La mise en oeuvre de l'impression du type décrit ci-dessus permet d'obtenir une très haute définition pour autant que le toner présente une granulométrie appropriée. Il est possible d'atteindre une définition de l'ordre de 1200dpi.

La vitesse d'application sur des feuilles de verre même de grandes dimensions peut être sensiblement accrue par rapport à celle de techniques antérieures. L'application sur des feuilles dont la largeur peut être de l'ordre de 3m est réalisable à des vitesses qui peuvent atteindre 10m/mn. Bien entendu ces vitesses peuvent aussi être obtenues pour des feuilles de dimensions moindres.

Après le revêtement sélectif vient l'étape de dépolissage. Les parties de la surface de l'article en verre non revêtues par la couche protectrice sont dépolies par l'élimination de matière. Selon l'invention, l'enlèvement de matière est réalisé soit par action mécanique via un procédé de sablage qui consiste à projeter à grande vitesse des grains d'un matériau abrasif sur la surface de l'article en verre, soit par une attaque acide traditionnellement réalisée au moyen d'une solution à base d'acide fluorhydrique.

L'attaque des parties non masquées de la surface du verre est plus ou moins poussée selon l'effet recherché. L'opération qui ne conduit qu'à un simple dépoli est celle qui est la plus légère. Pour des verres sodo-calciques ordinaires elle entraîne à partir d'une surface polie la formation d'une rugosité mesurée de l'ordre de 2µ ou moins. Cette opération est réalisée avec une solution relativement peut agressive et pendant un temps limité. Un exemple est une solution acide composée de 20% en masse de HF et de 62% en masse de NH₄HF₂ dans l'eau à 20 - 25 °C. Dans ce cas le choix de la nature des couches et de leur épaisseur est relativement facilité. Pour une gamme étendue de toners les couches résistent bien et les motifs sont bien délimités. Les compositions de protection peuvent en particulier ne comporter qu'une part limitée de cire.

Une attaque plus violente sur le même type de verres conduit à une gravure relativement peu profonde. La poursuite de l'attaque avec une solution plus agressive creuse davantage la surface non-masquée. Dans une certaine mesure l'opacification du verre dans ces zones n'est pas accentuée bien au contraire. La gravure est par exemple effectuée avec une solution constituée pour 60% d'acide fluorhydrique à 40%, et de 40% de solution d'acide sulfurique 18M. La profondeur de la gravure est par exemple de l'ordre de 50µ.

Des gravures plus profondes peuvent être effectuées en utilisant des solutions encore plus agressives, par exemple en utilisant un mélange en volume 80/20 d'une solution HF à 60% et d'acide sulfurique 18M. Pour un temps d'application analogue, de l'ordre de 5mn, on parvient ainsi à une gravure dont la profondeur est de l'ordre de 120µ.

Pour les solutions les plus agressives il est bon de choisir les toners pour lesquels la composition de protection est essentiellement constituée de paraffines. Ces compositions montrent une excellente résistance et adhèrent efficacement à la surface du verre. A titre indicatif un toner commercialisé par la société Canon sous la désignation Canon NP 120 convient bien.

Un autre toner dont la composition de protection est essentiellement à base de cire et qui convient bien pour les attaques avec des solutions très agressives est constitué en proportion pondérales de :

| | |
|---|---|
| Cire PE 190 (Clariant) | 24.2% |
| Cire Vestowax A616 (Evonik) | 25.0% |
| Oxyde de fer MS (Dowa) | 55.0% |
| Silice Aerosil R-972 (Evonik) | 0.5% |
| Hostanox 03 (Clariant) | 0.3% |

Pour des solutions d'attaque moins agressives d'autres toners, notamment des compositions comportant des paraffines et des constituants polymères tels que des acrylates résistent suffisamment. Un toner de ce type est celui commercialisé sous la désignation "Color Toner HP2600" de la société Canon.

Pour les revêtements à bas point de fusion un simple rinçage par des jets d'eau chaude suffit pour éliminer la couche de masquage. Pour les toners composites du type paraffine et acrylates, un rinçage avec un solvant de type acétone peut s'avérer nécessaire pour éliminer rapidement la couche.

## Revendications

1. Procédé de matage formant motif sur un produit verrier dans lequel le produit est revêtu d'une couche masquant les parties non-attaquées de la surface, le matage des parties non-masquées et l'élimination de la couche de masquage, dans lequel la couche de masquage est obtenue par une technique dans laquelle :
- un motif est digitalisé et mémorisé ;
- le motif en question est reproduit sur une surface sensible soumise à un champ électrique ;
- la surface sensible dont la surface est sélectivement activée est revêtue par une composition pulvérulente de toner, comportant des constituants électriquement chargeables et une composition de revêtement protecteur fusible ;
- la composition pulvérulente adhère sélectivement aux parties activées de la surface sensible ;
- la composition adhérant à la surface sensible est transférée sur l'objet en verre à revêtir préalablement chauffé faisant fondre cette composition formant une couche qui adhère à l'objet en verre.

2. Procédé selon la revendication 1 dans lequel le composition de revêtement protecteur du toner comporte une cire de paraffine.

3. Procédé selon l'une des revendications précédentes dans lequel la composition du revêtement protecteur présente un point de fusion compris dans l'intervalle de 50 à 140°C.

4. Procédé selon la revendication 3 dans lequel la composition du revêtement protecteur présente un point de fusion d'au moins 60°C et d'au plus 120°C.

5. Procédé selon l'une des revendications précédentes dans lequel la dimension médiane des particules de toner se situe entre 1 et 20µ et de préférence entre 5 et 15µ.

6. Procédé selon la revendication 5 dans lequel la dispersion granulométrique est telle que 90% des particules se situent par rapport à la dimension médiane à Dₘ±Dₘ/5, et de préférence dans l'intervalle Dₘ±Dₘ/10.

7. Procédé selon l'une des revendications précédentes dans lequel le toner utilisé comporte au moins 30% en poids de composition de revêtement protecteur fusible et de préférence de 40 à 60% en poids.

8. Procédé selon l'une des revendications précédentes dans lequel le toner comporte au moins 5% en poids de cire.

9. Procédé selon l'une des revendications précédentes dans lequel le toner renferme au moins 5% en poids de particules chargeables et de préférence de 15 à 50% en poids.

10. Procédé selon l'une des revendications précédentes dans lequel le toner comporte en plus un contrôleur de charge.

11. Procédé selon l'une des revendications précédentes dans lequel la couche de masquage présente une épaisseur comprise entre 5 et 100µ, et de préférence comprise entre 10 et 50µ.

12. Procédé selon l'une des revendications précédentes la température du moyen servant à l'application sur le produit verrier chaud est maintenue inférieure à celle de fusion de la composition de protection.

13. Procédé selon l'une des revendications précédentes dans lequel immédiatement après application de la couche de protection le produit verrier revêtu est ramené à température inférieure à celle de fusion de la couche.

14. Procédé selon l'une des revendications précédentes dans lequel le produit verrier revêtu est soumis à un sablage ou une attaque chimique au moyen d'une solution comportant de l'acide fluorhydrique.

15. Procédé selon la revendication 14 dans lequel la couche de protection est éliminée au moyen d'un lavage par jets d'eau chaude.
